# FASCICULE DE BREVET EUROPEEN

(11) **EP 1 095 462 B1**
(45) Date de publication et mention de la délivrance du brevet: **06.05.2004**
(21) Numéro de dépôt: 99929384.8
(22) Date de dépôt: 02.07.1999
(51) Int. Cl.: H04B 1/04, H01P 5/12, H03F 3/60

(54) **PROCEDE D'ELABORATION D'UN SIGNAL D'EMISSION ET EMETTEUR A CELLULES D'AMPLIFICATION POUR LA MISE EN OEUVRE DE CE PROCEDE**
VERFAHREN UND SCHALTUNG ZUR SIGNALVERARBEITUNG IN EINER MODULAREN VERSTÄRKERSCHALTUNG
METHOD FOR ELABORATING A TRANSMISSION SIGNAL AND TRANSMITTER WITH AMPLIFYING CELLS FOR IMPLEMENTING SAME

(30) Priorité: 10.07.1998 FR 9808925
(43) Date de publication de la demande: 02.05.2001
(73) Titulaire: Thales, 75008 Paris (FR)
(72) Inventeur: URSENBACH, François, Thomson-CSF, F-94117 Arcueil Cedex (FR); DE GRAMMONT, Arnaud, Thomson-CSF, F-94117 Arcueil Cedex (FR)
(74) Mandataire: Chaverneff, Vladimir
(86) Numéro de dépôt international: PCT/FR1999/001599
(87) Numéro de publication internationale: WO 2000/003489

(56) Documents cités:
- EP-A- 0 583 175
- US-A- 3 928 806
- US-A- 5 194 835

## Description

La présente invention concerne la sommation des puissances provenant de plusieurs cellules d'amplification en vue de fournir, sur une sortie unique, un signal d'émission.

Le rendement global d'un émetteur est fonction du rendement propre des cellules d'amplification, ainsi que de la puissance perdue dans les différentes étapes de recombinaison des puissances élémentaires fournies par ces mêmes cellules. Il est possible de jouer sur ces deux points pour améliorer les performances globales de l'émetteur. Il faut cependant respecter les exigences de linéarité en amplitude et en phase, ainsi que les fonctionnalités demandées aux émetteurs, telles l'interchangeabilité des modules à chaud et la standardisation de ceux-ci.

Les amplificateurs fonctionnant en classe A, c'est à dire dont les transistors, ou tout autre composant amplificateur, sont passants 100% du temps, fournissent le signal le plus linéaire en sortie, mais avec un rendement relativement médiocre. Pour améliorer ce rendement , il est possible de faire fonctionner ces transistors en classe AB, avec des montages de type push-pull. Ces montages sont quasi-linéaires mais le rendement reste faible. Dans ce type de montage, c'est le signal modulé qui est amplifié.

Les amplificateurs fonctionnant en classe C, ou mieux, en commmutation, ont un rendement idéal proche de 1, il est donc intéressant de se tourner vers ce type de montage pour obtenir un bon rendement d'ensemble. Il existe des émetteurs où le fonctionnement de toute ou partie des cellules d'amplification est commandé pour fournir le signal de sortie modulé en amplitude et en phase selon certains niveaux discrets afin de réaliser la constellation du signal numérique à transmettre. Ce type de montage ne permet pas d'obtenir un signal de sortie continu et, bien souvent, le rendement de recombinaison n'est pas optimisé.

Il existe des émetteurs mettant en oeuvre des cellules d'amplification de puissances élémentaires différentes. Une puissance de valeur quelconque peut alors être décomposée plus finement sur la base des puissances disponibles. Ces montages nécessitent un nombre important de types différents de cellules d'où un prix de revient élevé. Et, là encore, le rendement de recombinaison n'est pas optimisé.

Il existe également des amplificateurs de radiodiffusion avec des cellules d'amplification toutes identiques, fonctionnant en classe C. La modulation est réalisée par l'addition des tensions élémentaires de chaque cellule; pour cela les cellules délivrent ou non une tension, le long d'une barre, par des couplages inductifs. Dans ce type de dispositifs les cellules sont interdépendantes, ce qui exclut le remplacement d'éventuelles cellules défaillantes lors du fonctionnement de l'émetteur.

Le but de la présente invention est d'éviter ou, pour le moins, de réduire les inconvénients dont il a été question ci-devant.

Ceci est obtenu par une commande en amplitude et en phase de cellules d'amplification capables de fournir chacune au moins deux niveaux de sortie.

Selon l'invention il est proposé pour cela un procédé d'élaboration d'un signal d'émission d'amplitude instantané A et de phase instantanée ϕ₀, à l'aide de n, avec n entier au moins égal à 2, cellules d'amplification qui fournissent chacune un nombre entier, au moins égal à 2, de niveaux discrets de sortie, dont le niveau zéro, caractérisé en ce que, considérant le vecteur primaire de module A et d'argument ϕ₀, il consiste à déterminer n vecteurs secondaires de somme vectorielle égale au vecteur primaire, ces vecteurs secondaires étant choisis en relation biunivoque avec les n cellules et ayant chacun un module de valeur correspondant à l'un des niveaux discrets de la cellule avec laquelle il est en relation biunivoque et une phase, à commander chacune des n cellules pour qu'elle fournisse un signal d'amplitude et de phase instantanés dont les valeurs correspondent respectivement aux valeurs du module et de l'argument du vecteur secondaire en relation biunivoque avec la cellule considérée et à sommer, dans un dispositif de couplage d'énergies, les signaux fournis par les n cellules.

Selon l'invention il est également proposé un émetteur pour l'émission d'un signal d'amplitude instantanée A et de phase instantanée ϕ₀ comportant un oscillateur en radiofréquence, n, avec n entier au moins égal à 2, cellules d'amplification qui fournissent chacune un nombre entier fini, au moins égal à 2, de niveaux de sortie dont le niveau zéro, une antenne d'émission et un dispositif de couplage d'énergie pour coupler les cellules à l'antenne, caractérisé en ce qu'il comporte des moyens de calcul pour déterminer n vecteurs en relation biunivoque avec les n cellules tels que leur somme soit égale à un vecteur de module A et d'argument ϕ₀ et que le module de chacun d'entre eux ait une valeur égale à la valeur d'un des niveaux discrets de la cellule avec laquelle le vecteur est en relation biunivoque, des moyens de commande d'amplitude pour imposer à chaque cellule le niveau discret ainsi défini par le module du vecteur associé à la cellule considérée et des moyens de commande en phase pour, à partir de la phase de l'oscillateur, imposer à chaque cellule un déphasage égal à l'argument du vecteur associé à la cellule considérée.

La présente invention sera mieux comprise et d'autres caractéristiques apparaîtront à l'aide de la description ci-après et des figures s'y rapportant qui représentent :
- les figures 1 et 2 des représentations vectorielles d'un signal d'émission à obtenir et de manières de l'obtenir.
- la figure 3, une représentation schématique partielle d'un émetteur selon l'invention,
- la figure 4, un algorithme de calcul relatif à l'un des éléments de l'émetteur selon la figure 2,
- les figures 5 et 6 des schémas de deux des éléments de l'émetteur selon la figure 2.

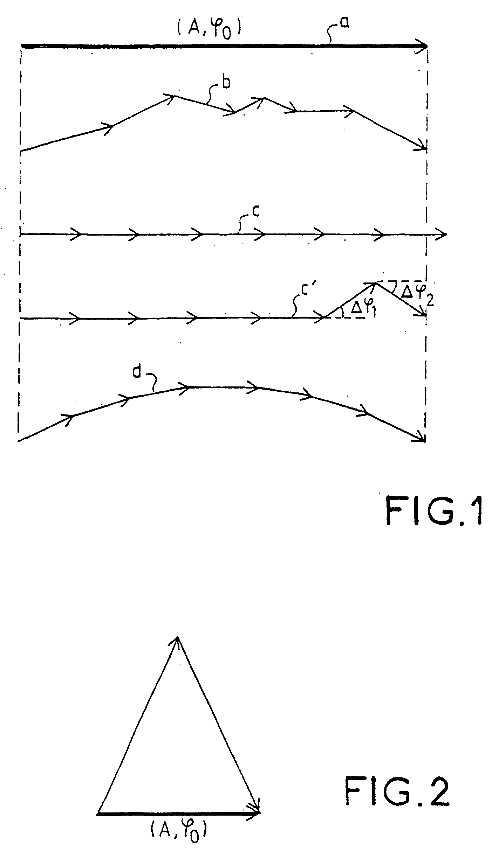

La figure 1 est une représentation vectorielle avec, en a, un premier vecteur de module A et d'argument ϕ₀. En b un ensemble de sept vecteurs de modules et d'arguments divers, est choisi de telle sorte que la somme de ses vecteurs donne le premier vecteur (A,ϕ₀). En c un ensemble de sept vecteurs de modules identiques et d'arguments tous égaux à ϕ, est choisi de telle sorte que la somme de ses vecteurs donne un vecteur dont l'argument est, bien entendu, égal à ϕ₀ mais dont le module est supérieur à A d'une valeur inférieure au module de chacun des sept vecteurs. En c' est représenté un groupe de sept vecteurs dont cinq sont identiques aux sept vecteurs représentés en c et dont les deux autres ont des phases ϕ₀ + Δ ϕ₁ et ϕ₀ + Δ ϕ₂ avec Δ ϕ₁ = - Δ ϕ₂ telles que la somme des sept vecteurs donne le premier vecteur.

Ces représentations vectorielles permettent de donner une première explication relativement à l'invention. Soit, en effet, à fournir, en sortie d'un émetteur équipé de cellules d'amplification, un signal de valeur instantanée (A, ϕ₀) Une première façon d'y arriver, très générale mais susceptible d'amélioration, est illustrée en b sur la figure 1; elle consiste à faire qu'une partie des cellules d'amplification, sept dans le cas représenté, donnent des signaux instantanés dont les amplitudes-phases correspondent respectivement aux modules-arguments des sept vecteurs. Cette première façon de faire peut être améliorée comme illustré en c' sur la figure 1; pour cela, parmi des cellules toutes identiques, seulement capables de fournir deux niveaux dont le niveau zéro, il en est choisi un nombre suffisant, sept dans le cas représenté, pour fournir des signaux instantanés dont les amplitudes-phases correspondent aux modules-arguments des sept vecteurs représentés en c'.

Diverses variantes peuvent être proposées pour élaborer le signal (A, ϕ₀) et en particulier une variante intéressante au cas illustré en c' sur la figure 1, consiste, tout en utilisant des cellules toutes identiques, à choisir des cellules capables de fournir plus de deux niveaux distincts. C'est le cas dans l'émetteur qui va servir d'exemple pour la suite de la description; dans cet émetteur les cellules d'amplification, toutes identiques présentent trois niveaux distincts, dont le niveau zéro; ceci permet de réduire la valeur des déphasages Δ ϕ₁, Δ ϕ₂ dont il a été question relativement à l'illustration c' e la figure 1 et ces valeurs ne seront les mêmes, au signe près, que si les deux cellules qui sont commandées pour présenter des phases instantanées ϕ₀ + Δ ϕ₁ et ϕ₀ + Δ ϕ₂ sont commandées pour fournir le même niveau.

Ces déphasages supplémentaires, Δϕ₁ et Δϕ₂, imposés respectivement à deux cellules, permettent d'élaborer avec exactitude le signal (A, ϕ₀); en variante, les déphasages nécessaires à l'obtention du signal (A, ϕ₀) peuvent être répartis entre les cellules choisies. Cette façon de procéder est illustrée en d sur la figure 1; là, contrairement à l'illustration b de la figure 1, les déphasages supplémentaires sont optimisés c'est-à-dire réduits au minimum compte tenu du signal (A, ϕ₀) à élaborer. Il est à noter que l'illustration selon d se rapporte à des cellules qui fournissent, du moins à l'instant considéré, toutes une même amplitude du signal; mais là encore des niveaux distincts, en nombre supérieur à deux, peuvent être employés.

Deux cas spéciaux sont à mentionner qui peuvent survenir lors de l'élaboration du signal d'émission (A, ϕ₀). Le premier de ces cas est celui où la somme des amplitudes choisies dans les cellules sélectionnées correspond exactement à l'amplitude A désirée; dans ce cas, bien entendu, il n'y a pas à faire intervenir des déphasages supplémentaires tels que les déphasages Δ ϕ₁, Δ ϕ₂ rencontrés plus avant dans .ce texte; mais il ne s'agit là que d'une situation de transition dans l'élaboration d'un signal d'émission dont la valeur instantanée (A; ϕ₀) requiert l'emploi de déphasages supplémentaires. Le second de ces cas est celui où le plus faible des niveaux non nuls élaborés par les cellules d'amplifications est supérieur à l'amplitude instantanée A désirée; dans ce cas le choix, au lieu de se porter sur une seule cellule, doit se porter sur deux cellules comme dans l'illustration vectorielle reportée selon la figure 2; cette figure 2 correspond à l'élaboration du signal (A, ϕ₀) à partir de deux cellules qui fournissent des signaux de mêmes niveaux mais décalés en phase.

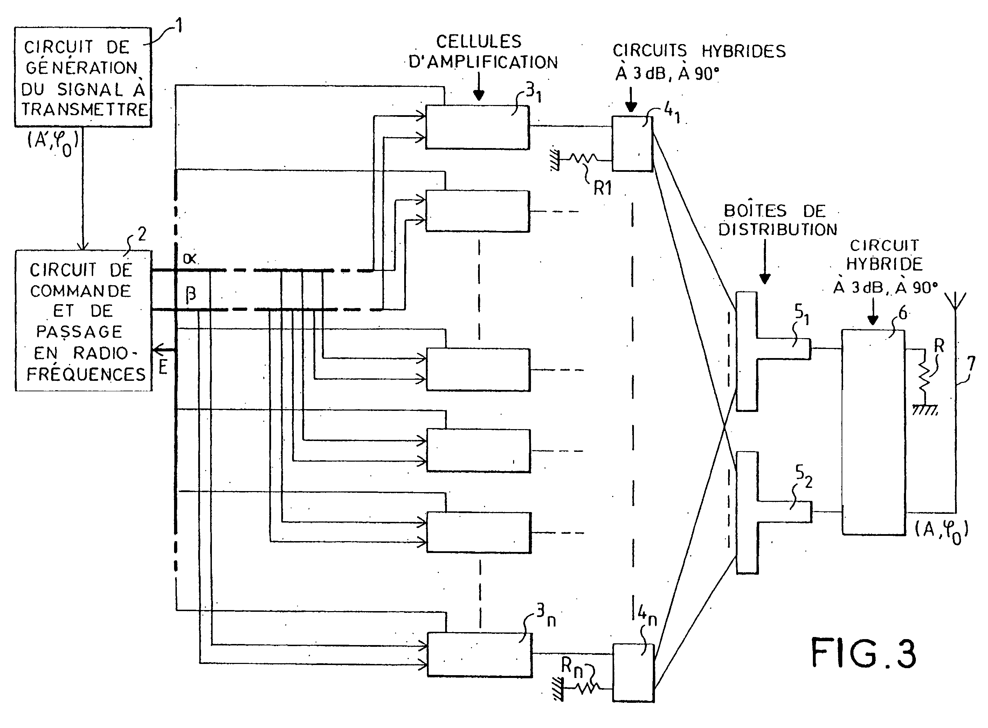

La figure 3 représente un émetteur qui comporte, entre autres un circuit numérique 1 de génération des caractéristiques d'amplitude, A', et phase, ϕ₀ du signal qu'il est souhaité d'émettre et une antenne 7. La partie de l'émetteur correspondant à l'invention est celle comprise entre le circuit 1 et l'antenne 7; elle comporte un circuit, 2, de commande et de passage en radiofréquences, n cellules d'amplification 3₁ à 3ₙ et un dispositif de couplage d'énergies, fait de circuits hybrides à 3 dB, à 90°, 4₁ à 4ₙ, 6, de deux boîtes de distribution 5₁, 5₂ et de résistances d'équilibrage, R1-Rn,R.

Le dispositif de couplage d'énergies est décrit dans le brevet français 2 625 053 déposé le 18 décembre 1987 et dans divers autres brevets correspondants dont le brevet US 5 194 835. C'est ce dispositif qui est employé dans l'émetteur qui a servi d'exemple à la présente description; il présente l'avantage de préserver un découplage parfait entre ses différents accès et cela dans une large bande de fréquences. Mais en fonction de la gamme de fréquences considérée et de la largeur de bande souhaitée, d'autres dispositifs de découplage d'énergies peuvent être utilisés : boîtes de distribution associées à des circulateurs à ferrites, coupleurs hybrides montés en cascade, montage de type Wilkinson...

Le circuit 2 selon selon la figure 3, reçoit du circuit 1 les valeurs instantanées A', ϕ₀ du signal à élaborer. Il reçoit également des cellules d'amplification 3₁ à 3ₙ des signaux E qui le renseignent sur l'état de ces cellules : fonctionnement correct ou défectueux. Il choisit en fonction de la valeur A' un certain nombre de cellules parmi les cellules dont le fonctionnement est correct et indique à chacune d'entre elles, le niveau, α, et la phase, β, du signal qu'elle doit délivrer.

Dans l'émetteur qui a servi d'exemple à la présente description, le nombre total, n de cellules d'amplification était de 16, ces cellules étaient toutes identiques et fournissaient trois niveaux discrets, niveau zéro compris.

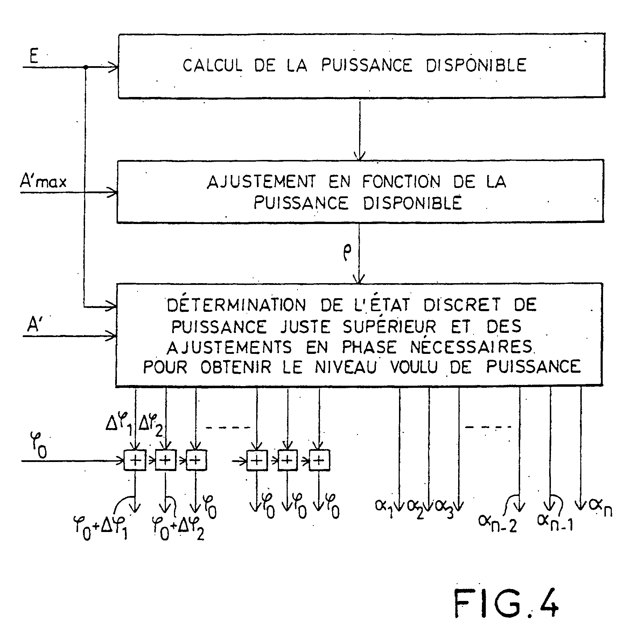

La figure 4 est un algorithme de calcul relatif au circuit 2 de la figure 3.

Connaissant, par les signaux E, l'état de chacune des cellules d'amplification, un calcul de la puissance maximale disponible Pmax, est effectué qui tient compte des cellules éventuellement défectueuses. Connaissant par ailleurs la valeur maximum A'max que peut atteindre A', et connaissant donc la puissance de sortie désirée P'max, correspondant à A'max, un ajustement de la puissance de sortie maximale de l'émetteur est effectué. Cet ajustement consiste à fournir un coefficient de proportionnalité P; le produit P.A' donne la valeur A dont il a été question précédemment; ce coefficient p garde la valeur 1 tant que la puissance ρ'max , correspondant à A'max, est au plus égale à la puissance maximale disponible Pmax; quand P'max devient supérieure à Pmax le coefficient ρ prend une valeur inférieure à 1, égale à la racine carrée du rapport Pmax / P'max.

Connaissant P et A', et donc A, une détermination des niveaux discrets par cellule est effectuée, qui correspond à une puissance égale ou légèrement supérieure à la puissance désirée; cela correspond à l'illustration c selon la figure 1 mais dans l'exemple décrit, les vecteurs non nuls ne sont pas obligatoirement égaux étant donné que, si les cellules sont identiques, elles proposent non pas deux mais trois niveaux discrets à leur sortie. Il est à noter toutefois que, malgré cette possibilité de choix entre trois niveaux par cellule d'amplification, une condition supplémentaire est mise dans l'exemple décrit à la détermination des niveaux, à savoir une. limitation de choix à deux niveaux distincts consécutifs : les niveaux 0 et 1 ou 1 et 2 si les niveaux sont répertoriés 0, 1, 2 dans l'ordre croissant ; cette condition supplémentaire est destinée à donner un meilleur équilibre dans la répartition des puissances appliquées aux entrées du dispositif de couplage d'énergies. Le cas selon la figure 2 est traité à cette étape de l'algorithme de calcul. La condition supplémentaire consistant à limiter le choix à deux niveaux distincts peut également être appliquée à des cellules d'amplification toutes identiques mais présentant plus de trois niveaux distincts.

Des signaux numériques α₁ à αₙ sont envoyés aux n cellules pour commander les niveaux discrets, nuls et non nuls, choisis.

En même temps, pour réaliser l'ajustement par la phase, comme illustré en c' sur la figure 1, les angles Δ ϕ₁ et Δ ϕ₂ sont calculés pour deux des cellules sélectionnées.

Connaissant ϕ₀, cette valeur est adressée, sous forme d'un signal de commande numérique, β₃ à βₙ, à n-2 des cellules; les deux cellules permettant l'ajustement par la phase reçoivent, quant à elles, respectivement des signaux de commande numérique β₁, β₂ de phase ϕ₀ + Δ ϕ₁ et ϕ₀ + Δ ϕ₂. Il est supposé ici et dans l'algorithme selon la figure 3 que, pour le signal instantané A, ϕ₀ considéré, ce sont les deux premières cellules qui servent à réaliser l'ajustement en phase; mais, bien entendu, pour un autre signal instantané à fournir, d'autres cellules pourront être choisies pour effectuer l'ajustement par la phase surtout si l'une et / ou l'autre de ces premières cellules d'amplification étaient défectueuses.

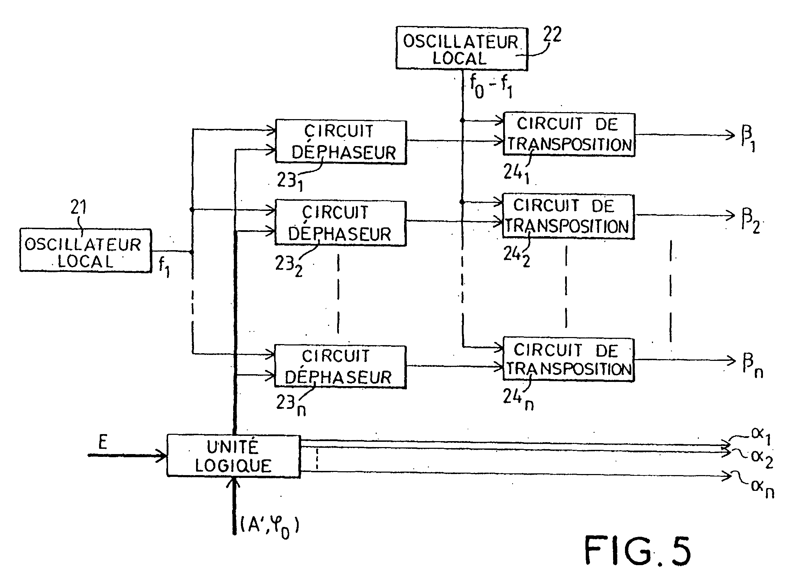

La figure 5 est un schéma détaillé du circuit 2 selon la figure 3; elle montre une unité logique, 20, constituée par un micro-ordinateur qui reçoit les caractéristiques A',ϕ₀ du signal instantané qu'il est souhaité d'émettre , ainsi que les signaux E sur l'état des cellules d'amplification.

Comme indiqué à l'aide , en particulier, de l'algorithme selon la figure 4, l'unité logique 20 détermine les signaux numériques α₁ à αₙ de commande de l'état de fonctionnement des cellules d'amplification 3₁ à 3ₙ représentées sur la figure 3.

Pour l'élaboration des signaux β₁ à βₙ de commande de déphasage des cellules d'amplification le circuit 2 selon la figure 3 comporte des circuits déphaseurs 23₁ à 23ₙ, suivis respectivement de circuits de transposition de fréquences 24₁ à 24_{n.}

Les déphasages sont élaborés en fréquence intermédiaire grâce aux circuits déphaseurs 23₁ à 23ₙ puis transposés en radiofréquence par les circuits de transposition. Les circuits déphaseurs reçoivent pour cela un signal à fréquence intermédiaire, f₁, d'un oscillateur local 21 et ont leurs déphasages qui sont commandés numériquement par l'unité logique 20; puis les signaux fournis par les circuits déphaseurs sont transposés en radiofréquence par mélange dans les circuits de transposition de fréquence avec un signal à fréquence f₀-f₁ où f₀ est la fréquence porteuse du signal à émettre par l'émetteur selon la figure 3; ce signal à fréquence f₀-f₁ est fourni par un oscillateur local 22.

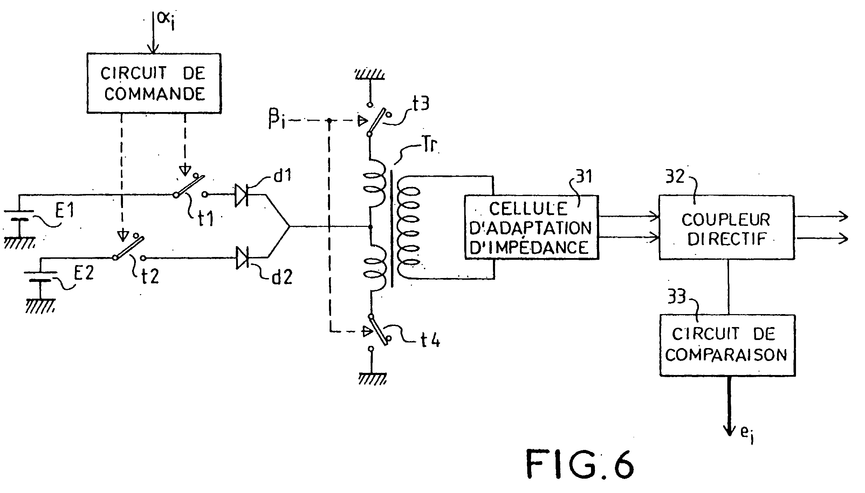

La figure 6 est une représentation schématique d'une cellule d'amplification 3; il s'agit de l'une quelconque des cellules 3₁ à 3ₙ selon la figure 3, étant donné que toutes les cellules sont identiques. Sur cette figure, pour faciliter la compréhension, les transistors utilisés, fonctionnant en commutation, sont représentés sous la forme d'interrupteurs, avec une commande en trait interrompu de l'interrrupteur.

La cellule d'amplification comporte deux sources de tension continue E1, E2, de valeurs différentes, reliées au même point milieu d'un enroulement primaire d'un transformateur Tᵣ respectivement par un interrupteur t₁ suivi d'une diode d1 montée dans le sens passant pour le courant de la source E1 et par un interrupteur t2 suivi d'une diode d2 montée dans le sens passant pour le courant de la source E2. Les interrupteurs t1, t2 sont dans l'exemple décrit, des transistors basse fréquence; ils sont commandés par un circuit de commande 30 qui reçoit sur son entrée le signal numérique αᵢ de sélection d'un des trois niveaux discrets de fonctionnement de la cellule.

Les extrémités de l'enroulement primaire du transformateur Tr sont réunis à la masse respectivement à travers deux interrupteurs t3, t4; ces interrupteurs sont commandés par le signal de commande numérique βᵢ. Les interrupteurs t3, t4 sont, dans l'exemple décrit, deux transistors radiofréquence fonctionnant en commutation dans un montage push-pull.

L'enroulement secondaire du transformateur Tr à ses extrémités reliées aux deux bornes d'entrée d'un circuit d'adaptation d'impédance et de filtrage 31. La sortie du circuit 31 est couplée à l'entrée d'un coupleur directif 32; ce coupleur a une sortie principale qui constitue la sortie de la cellule d'amplification et une sortie annexe qui est reliée à l'entrée d'un circuit de comparaison 33. La sortie du circuit 33 fournit, parmi les signaux numériques E sur l'état de fonctionnement des cellules d'amplification, celui, eᵢ, qui est relatif à la cellule d'amplification 3ᵢ considérée.

Le fonctionnement de la cellule d'amplification selon la figure 6 est le suivant.

Selon la valeur du signal numérique, αᵢ, de sélection d'un des trois niveaux discrets de fonctionnement de la cellule, le circuit de commande 30
- laisse les interrupteurs t1 et t2 ouverts,
- ferme l'interrupteur t1,
- ferme l'interrupteur t2,
il en résulte, au point milieu de l'enroulement primaire du transformateur Tr, l'arrivée d'un courant dont les valeurs, en fonction de l'état des interrupteurs t1 et t2, sont respectivement
- 0
- I₁
- I₂ (avec I₂ supérieur à I₁)

Ces trois valeurs distinctes de courants déterminent les trois niveaux discrets dont il a été question dans ce qui précède.

Le montage push-pull avec les deux interrupteurs t3, t4 et le transformateur Tr, peut ainsi, sous la commande du signal radiofréquence βi, délivrer un signal radiofréquence amplifié. Ce signal, après passage dans le circuit 31 puis dans le coupleur 32, fournit le signal radiofréquence désiré sur la sortie principale du coupleur directif 32. Le coupleur 32 est un coupleur de mesure dont le rôle est de dévier une infime fraction du signal de sortie du circuit 31 vers le circuit de comparaison 33; après comparaison avec des valeurs de référence, le circuit 33 peut alors fournir le signal numérique ei sur l'état de la cellule d'amplification 3i considérée et, plus précisément, indiquer si la cellule n'est pas en mesure de fournir tel ou tel de ses niveaux discrets.

## Revendications

1. Procédé d'élaboration d'un signal d'émission d'amplitude instantané A et de phase instantanée ϕ₀, à l'aide de n, avec n entier au moins égal à 2, cellules d'amplification qui fournissent chacune un nombre entier, au moins égal à 2, de niveaux discrets de sortie, dont le niveau zéro, **caractérisé en ce que**, considérant le vecteur primaire de module A et d'argument ϕ₀, il consiste à déterminer n vecteurs secondaires de somme vectorielle égale au vecteur primaire, ces vecteurs secondaires étant choisis en relation biunivoque avec les n cellules et ayant chacun un module de valeur correspondant à l'un des niveaux discrets de la cellule avec laquelle il est en relation biunivoque et une. phase, à commander chacune des n cellules pour qu'elle fournisse un signal d'amplitude et de phase instantanés dont les valeurs correspondent respectivement aux valeurs du module et de l'argument du vecteur secondaire en relation biunivoque avec la cellule considérée et à sommer, dans un dispositif de couplage d'énergies, les signaux fournis par les n cellules.

2. Procédé selon les revendications 1, **caractérisé en ce que**, pour déterminer les n vecteurs, il consiste à choisir au moins 2 cellules pour fournir des niveaux autres que zéro et à choisir, dans les n cellules, respectivement n niveaux tels que la somme, qui sera appelée somme intermédiaire, des valeurs de ces n niveaux soit au moins égale à A et, dans le cas où la somme intermédiaire est juste égale à A, à choisir pour chacun des n vecteurs l'argument ϕ₀, et, dans le cas où la somme intermédiaire est supérieure à A, à choisir pour n-2 des n vecteurs l'argument ϕ ₀ et, pour 2 des vecteurs en relation biunivoque avec 2 cellules choisies pour fournir des niveaux autres que zéro, des arguments ϕ₀ + Δ ϕ₁ et ϕ₀ + Δ ϕ₂ tels que la somme des n vecteurs secondaires soit égale au vecteur primaire.

3. Procédé selon l'une des revendications précédentes, **caractérisé en ce qu'**il consiste à utiliser des cellules d'amplification toutes identiques.

4. Procédé selon la revendication 3, **caractérisé en ce qu'**il consiste à utiliser des cellules d'amplification dont le nombre de niveaux de sortie est au moins égal à 3 et à se limiter, pour les modules des n vecteurs secondaires, à deux valeurs correspondant respectivement à deux niveaux de sortie consécutifs.

5. Emetteur pour l'émission d'un signal d'amplitude instantanée A et de phase instantanée ϕ₀ comportant un oscillateur en radiofréquence (22), n, avec n entier au moins égal à 2, cellules d'amplification (3₁ à 3ₙ) qui fournissent chacune un nombre entier fini, au moins égal à 2, de niveaux de sortie dont le niveau zéro, une antenne d'émission (7) et un dispositif de couplage d'énergies (4₁ à 4ₙ, 5₁-5₂, 6) pour coupler les cellules à l'antenne, **caractérisé en ce qu'**il comporte des moyens de calcul pour déterminer n vecteurs en relation biunivoque avec les n cellules tels que leur somme soit égale à un vecteur de module A et d'argument ϕ₀ et que le module de chacun d'entre eux ait une valeur égale à la valeur d'un des niveaux discrets de la cellule avec laquelle le vecteur est en relation biunivoque, des moyens de commande d'amplitude pour imposer à chaque cellule le niveau discret ainsi défini par le module du vecteur associé à la cellule considérée et des moyens de commande en phase (21, 23₁ à 23ₙ, 24₁ à 24ₙ) pour, à partir de la phase de l'oscillateur, imposer à chaque cellule un déphasage égal à l'argument du vecteur associé à la cellule considérée.

## Claims

1. Method for preparing a transmission signal with an instantaneous amplitude A and an instantaneous phase ϕ₀, by means of n amplification cells, with n a whole number at least equal to 2, each amplification cell giving a whole number, at least equal to 2, of discrete output levels, including the level zero, **characterized in that**, considering the primary vector of modulus A and argument ϕ₀, it consists in determining n secondary vectors with a vector sum equal to the primary vector, these secondary vectors being chosen in a one-to-one relationship with the n cells and each having a modulus with a value corresponding to one of the discrete levels of the cell with which it is in a one-to-one relationship and a phase, in controlling each of the n cells so that it gives a signal with instantaneous amplitude and phase whose values correspond respectively to the values of the modulus and of the argument of the secondary vector in a one-to-one relationship with the cell considered and in summing up, in an energy-coupling device, the signals given by the n cells.

2. Method according to Claim 1, **characterized in that**, to determine the n vectors, it consists in choosing at least two cells to give levels other than zero and in choosing, in the n cells, respectively n levels such that the sum, which will hereinafter be called an intermediate sum, of the values of these n levels is at least equal to A and, should the intermediate sum be precisely equal to A, in choosing for each of the n vectors the argument ϕ₀, and should the intermediate sum be greater than A, in choosing, for n-2 of the n vectors, the argument ϕ₀, and, for two of the vectors in a one-to-one relationship with two cells chosen to give levels other than zero, arguments ϕ₀ + Δϕ₁, and ϕ₀ + Δϕ₂ such that the sum of the n secondary vectors is equal to the primary vector.

3. Method according to one of the above claims, **characterized in that** it consists in using amplification cells that are all identical.

4. Method according to Claim 3, **characterized in that** it consists in using amplification cells for which the number of output levels is at least equal to 3 and in limiting itself, for the moduli of the n secondary vectors, to two values corresponding respectively to two consecutive output levels.

5. Transmitter for the transmission of a signal with an instantaneous amplitude A and an instantaneous phase ϕ₀ comprising a radiofrequency oscillator (22), n amplification cells (3₁ to 3ₙ) with n a whole number at least equal to 2, each amplification cell giving a finite whole number, at least equal to 2, of output levels, including the zero level, a transmission antenna (7) and an energy-coupling device (4₁ to 4ₙ, 5₁-5₂, 6) to couple the cells to the antenna, **characterized in that** it comprises computation means to determine n vectors in a one-to-one relationship with the n cells such that their sum is equal to a vector of modulus A and argument ϕ₀ and **in that** the modulus of each of them has a value equal to the value of one of the discrete levels of the cell with which the vector is in a one-to-one relationship, amplitude control means to impose, on each cell, the discrete level thus defined by the modulus of the vector associated with the cell considered and phase control means (21, 23₁ to 23ₙ, 24₁ to 24ₙ) in order to impose on each cell, from the phase of the oscillator, a phase shift equal to the argument of the vector associated with the cell considered.

## Patentansprüche

1. Verfahren zur Ausbildung eines Sendesignals mit einer Augenblicksamplitude A und einer Augenblicksphase ϕ₀ mit Hilfe von n, wobei n eine ganze Zahl mindestens gleich 2 ist, Verstärkungszellen, die je eine ganze Zahl, mindestens gleich 2, von diskreten Ausgangspegeln liefern, darunter der Nullpegel, **dadurch gekennzeichnet, dass**, wenn angenommen wird, dass der Primärvektor eine Vektorgröße A und ein Argument ϕ₀ hat, das Verfahren darin besteht, n Sekundärvektoren mit einer Vektorsumme gleich dem Primärvektor zu bestimmen, wobei diese Sekundärvektoren in einer eineindeutigen Beziehung mit den n Zellen gewählt werden und je eine Vektorgröße mit einem Wert, der einem der diskreten Pegel der Zelle entspricht, mit der er in eineindeutiger Beziehung steht, und eine Phase haben, jede der n Zellen so zu steuern, dass sie ein Signal mit einer Augenblicksamplitude und einer Augenblicksphase liefert, deren Werte je den Werten der Vektorgröße und des Arguments des mit der betroffenen Zelle in eineindeutiger Beziehung stehenden Sekundärvektors entsprechen, und in einer Energiekopplungsvorrichtung die von den n Zellen gelieferten Signale zu summieren.

2. Verfahren nach Anspruch 1, **dadurch gekennzeichnet, dass** es zur Bestimmung der n Vektoren darin besteht, mindestens 2 Zellen zu wählen, um andere Pegel als Null zu liefern, und in den n Zellen jeweils n solche Pegel zu wählen, dass die Summe, die Zwischensumme genannt wird, der Werte dieser n Pegel mindestens gleich A ist, und in dem Fall, in dem die Zwischensumme genau gleich A ist, für jeden der n Vektoren das Argument ϕ₀ zu wählen, und in dem Fall, in dem die Zwischensumme höher als A ist, für n-2 der n Vektoren das Argument ϕ₀ zu wählen, und für 2 der Vektoren, die in eineindeutiger Beziehung mit 2 Zellen stehen, die gewählt werden, um andere Pegel als Null zu liefern, Argumente ϕ₀ + Δϕ₁ und ϕ₀ + Δϕ₂ derart zu wählen, dass die Summe der n Sekundärvektoren gleich dem Primärvektor ist.

3. Verfahren nach einem der vorhergehenden Ansprüche, **dadurch gekennzeichnet, dass** es darin besteht, Verstärkungszellen zu verwenden, die alle gleich sind.

4. Verfahren nach Anspruch 3, **dadurch gekennzeichnet, dass** es darin besteht, Verstärkungszellen zu verwenden, deren Anzahl von Ausgangspegeln mindestens gleich 3 ist, und sich für die Vektorgrößen der n Sekundärvektoren auf zwei Werte zu beschränken, die zwei aufeinanderfolgenden Ausgangspegeln entsprechen.

5. Emitter zum Senden eines Signals mit einer Augenblicksamplitude A und einer Augenblicksphase ϕ₀, der einen Radiofrequenz-Oszillator (22), n, wobei n eine ganze Zahl mindestens gleich 2 ist, Verstärkungszellen (3₁ bis 3ₙ), die je eine endliche ganze Zahl, mindestens gleich 2, von Ausgangspegeln liefern, darunter der Nullpegel, eine Sendeantenne (7) und eine Energiekopplungsvorrichtung (4₁ bis 4ₙ, 5₁-5₂, 6) aufweist, um die Zellen mit der Antenne zu koppeln, **dadurch gekennzeichnet, dass** er Rechenmittel, um n solche Vektoren in eineindeutiger Beziehung mit den n Zellen zu bestimmen, dass ihre Summe gleich einem Vektor mit einer Vektorgröße A und einem Argument ϕ₀ ist und dass die Vektorgröße jedes von ihnen einen Wert gleich dem Wert eines der diskreten Pegel der Zelle hat, mit der der Vektor in eineindeutiger Beziehung steht, Mittel zur Amplitudensteuerung, um jeder der Zellen den so von der Vektorgröße des der betrachteten Zelle zugeordneten Vektors definierten diskreten Pegel aufzuzwingen, und Phasensteuerungsmittel (21, 23₁ bis 23ₙ, 24₁ bis 24ₙ) aufweist, um ausgehend von der Phase des Oszillators jeder Zelle eine Phasenverschiebung gleich dem Argument des der betrachteten Zelle zugeordneten Vektors aufzuzwingen.
